Europäisches Patentamt

European Patent Office

Office européen des brevets

(19)

(11) Numéro de publication: **0 246 974**
**A1**

# (12) DEMANDE DE BREVET EUROPEEN

(21) Numéro de dépôt: **87401138.0**

(22) Date de dépôt: **21.05.87**

(51) Int. Cl.⁴: **H 02 G 15/068**

(30) Priorité: **21.05.86 FR 8607185**

(43) Date de publication de la demande:
**25.11.87 Bulletin 87/48**

(84) Etats contractants désignés:
**AT BE CH DE ES FR GB GR IT LI LU NL SE**

(71) Demandeur: **TREFICABLE PIRELLI**
**1, rue des Usines B.P. 13**
**F-94410 Saint Maurice (FR)**

(72) Inventeur: **Bouju,Hubert**
**14 rue des Réservoirs**
**F-94410 SAINT MAURICE (FR)**

(74) Mandataire: **Lepeudry-Gautherat, Thérèse et al**
**ARMENGAUD JEUNE CABINET LEPEUDRY 6, rue du Fg.**
**St-Honoré**
**F-75008 Paris (FR)**

(54) **Manchon d'isolation pour extrémité unipolaire de conducteur électrique.**

(57) L'invention concerne un manchon d'isolation pour conducteur électrique. Une enveloppe souple 1 est munie sur une partie de sa longueur BD d'une couche interne 14 jouant le rôle de couche de répartition de champ électrique, destinée à venir en contact par au moins une de ses extrémités avec un écran semi-conducteur 6 porté par le conducteur électrique, et elle comporte au moins au moyen complémentaire constitué d'un redent 15 qui forme cran de blocage entre l'extrémité de la cosse 2 et l'arrêt d'isolant 5 pour positionner de façon précise l'enveloppe 1 et par conséquent la couche 14 par rapport à l'écran semi-conducteur.

Application à l'isolation d'une extrémité unipolaire de conducteur moyenne tension. Figure 1.

FIG.1

EP 0 246 974 A1

**Description**

Manchon d'isolation pour extrémité unipolaire de conducteur électrique.

L'invention qui se rapporte à une extrémité unipolaire de conducteur électrique terminée par une cosse, concerne plus précisément un manchon d'isolation muni d'une couche de répartition du champ électrique et comportant un moyen pour assurer le positionnement précis de cette couche.

On sait que les pièces d'extrémité unipolaires notamment de câbles conducteurs à moyenne tension comportent essentiellement une cosse d'extrémité sertie sur l'âme métallique de l'extrémité dénudée du câble dont l'isolant s'arrête à proximité de ladite cosse. Un peu plus loin s'arrête également l'écran métallique semi-conducteur qui enveloppe l'isolant du câble et sur lequel est frettée la prise de terre. Cet écran métallique doit en outre être associé à un dispositif qui atténue la concentration du champ électrique à l'arrêt d'écran et par conséquent évite une rupture diélectrique dans l'air. Que ce soit au niveau de la jonction du câble et de la cosse, ou au niveau de l'arrêt d'écran, il importe d'empêcher la pénétration d'humidité pour éviter toute condensation risquant de perturber l'effet électrique.

On connaît une disposition qui consiste à enfiler sur le câble un cône de contrainte prémoulé ayant une forme géométrique particulière apte à éviter la concentration du champ électrique au niveau de l'arrêt d'écran et par conséquent sa rupture diélectrique dans l'air. Cette pièce a toutefois l'inconvénient d'avoir une ligne de fuite trop grande, de déborder assez nettement du diamètre du câble et de le rendre ainsi plus encombrant à manipuler, et de ne s'adapter que sur une section de câble bien déterminée, obligeant ainsi à prévoir autant de dimensions de cônes de contrainte que de sections de câbles à protéger.

Une autre solution connue consiste à remplacer ce cône par un tube à paroi mince et souple pouvant s'adapter à plusieurs types de câbles, constitué d'une matière assurant la répartition du champ électrique. Ce tube qui peut être un manchon rétractable portant une enduction interne de carbure de silicium doit être protégé par un élément de couverture qui tienne la condensation. Une pièce ou une couche supplémentaire, opération qui nécessite du matériel et du temps.

Pour s'affranchir de ces inconvénients et faire en sorte que les pièces d'extrémité soient protégées de l'humidité et que la concentration du champ électrique soit atténuée au niveau de l'arrêt d'écran, sans pour autant mettre en oeuvre de dispositifs encombrants et coûteux, la demanderesse a imaginé un manchon d'isolation formé d'une enveloppe souple monobloc, permettant de satisfaire à plusieurs diamètres de câbles, qui se place aisément par enfilage sur l'extrémité unipolaire d'un conducteur électrique, qui a intégré en elle-même une couche de répartition de champ électrique et qui comporte un moyen intrinsèque de positionnement dudit manchon par rapport au conducteur.

Un objet de la présente invention consiste donc en un manchon d'isolation dont l'enveloppe souple constitutive est munie sur une partie de sa longueur d'une couche interne souple qui est destinée à venir en contact par au moins une de ses extrémités avec un écran semi-conducteur porté par la conducteur électrique, couche qui joue le rôle de couche de répartition de champ électrique, et ladite enveloppe comportant au moins un moyen complémentaire permettant d'assurer le positionnement précis de la couche de répartition de champ par rapport à l'écran semi-conducteur.

Selon une caractéristique principale de l'invention la couche de répartition de champ électrique est au contact avec l'écran semi-conducteur par une certaine partie de sa longueur totale et par l'intermédiaire au moins d'un ruban semi-conducteur entourant le conducteur et en contact avec l'écran semi-conducteur, une tresse de prise de terre étant intercalée entre le ruban et l'écran semi-conducteur faisant contact avec ce dernier par l'intermédiaire d'une râpe sur laquelle elle est soudée.

Selon une autre caractéristique de l'invention le moyen complémentaire assurant le positionnement précis de l'enveloppe sur le conducteur électrique est constitué d'un redent localisé à l'intérieur de ladite enveloppe à proximité de l'extrémité de la partie terminale souple de celle-ci, le redent formant une excroissance à l'intérieur de l'enveloppe, excroissance dont la partie centrale est percée d'un orifice d'un diamètre au moins égal au diamètre de l'âme centrale du conducteur électrique.

Une caractéristique particulière complémentaire consiste selon l'invention à faire en sorte que la partie inférieure du redent en direction de la partie centrale de l'enveloppe, porte un pan coupé autour de l'orifice, qui ménage le long da ladite enveloppe une couronne plane perpendiculaire à la paroi interne de cette dernière, des fentes axiales étant en outre prévues sur toute la hauteur du redent et s'étendant jusqu'à la paroi interne de l'enveloppe.

D'autres caractéristiques particulières et avantages de l'invention apparaîtront à la lecture de la description suivante d'une forme de réalisation prise à titre d'exemple et faisant référence au dessin annexé qui représente :

    Figure 1 : une vue en élévation du manchon d'isolation monté sur une extrémité unipolaire de conducteur électrique dont la partie droite est représentée en coupe,

    Figure 2 : une vue partielle écorchée en perspective du redent montré à la figure 1,

    Figure 3 : une vue partielle en coupe à plus grande échelle du redent montré à la figure 1,

    Figure 4 : une vue partielle en coupe à plus grande échelle de la partie inférieure de l'enveloppe montrée à la figure 1.

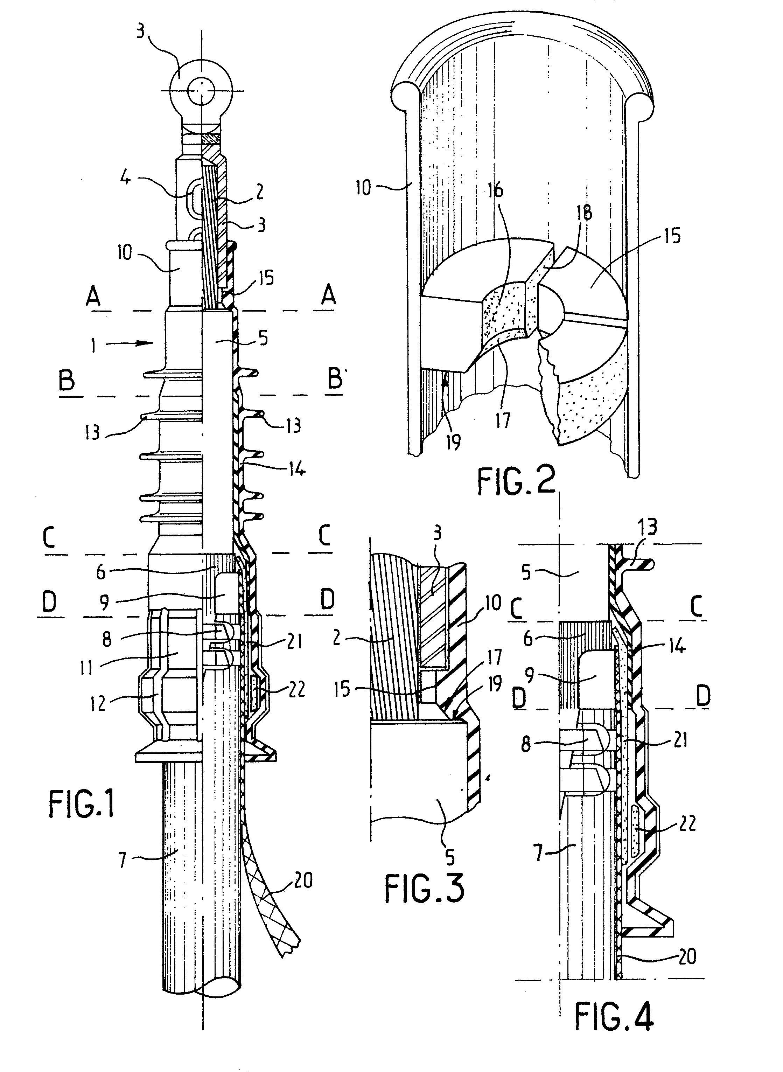

On a représenté à la figure 1 une extrémité unipolaire de conducteur dont les éléments constitutifs sont apparents sur la partie droite du dessin. Le conducteur est constitué d'une âme centrale 2 dont l'extrémité dénudée est sertie à une cosse 3 par des parties poinçonnées 4. La couche 5 d'isolant qui entoure cette âme est arrêtée au niveau A, à partir duquel dépasse l'âme 2 du câble dénudé. Cet isolant 5 est lui-même coiffé d'un écran semi-conducteur 6 qui s'arrête au niveau C à quelques centimètres du niveau A. L'écran semi-conducteur 6 est entouré d'une gaine 7 qui s'arrête au niveau D laissant ainsi découvert l'écran semi-conducteur sur la distance CD. En se référant également à la figure 4 on voit que dans sa partie terminale à proximité de ce niveau D, la gaine est évasée et entourée d'un dispositif de frettage 8. Ce dispositif de frettage 8 permet de serrer contre la portion dénudée de l'écran semi-conducteur 6 une râpe 9, intercalée entre l'écran et l'extrémité de la gaine 7, qui assure un bon contact électrique de l'écran avec une tresse 20 formant prise de terre puisque ladite tresse est soudée sur la râpe. Un ruban semi-conducteur 21 est en outre enroulé depuis l'extrémité de l'écran 6 autour de la tresse 20, et recouvre le frettage 8 sur une certaine longueur de la gaine 7. Enfin un mastic d'étanchéité 22 est lui-même rubané autour de la partie terminale du précédent ruban 21.

Une enveloppe souple du genre en silicone désignée dans son ensemble par la référence 1 est enfilée sur cette extrémité du conducteur sur lequel elle est positionnée de façon précise comme on l'expliquera plus loin. Cette enveloppe de forme générale cylindrique présente une extrémité souple 10 d'un diamètre légèrement inférieur au diamètre extérieur de la cosse 3 sur laquelle elle vient s'appliquer par élasticité, pour assurer l'étanchéité. L'autre extrémité 11 de plus grand diamètre est munie de nervures 12 améliorant sa rigidité ; elle entoure la gaine 7 du conducteur ainsi que le frettage 8 et la tresse 9. La zone intermédiaire de l'enveloppe 1 porte des ailettes 13 faiblement débordantes de l'enveloppe.

L'enveloppe 1 est munie sur sa paroi interne et sur une partie de sa longueur, entre un niveau B et sensiblement le niveau D, d'une couche 14 de répartition de champ électrique. Cette couche moulée avec la couche principale ou servant de couche de base sur laquelle est surmoulée l'enveloppe est une couche de faible épaisseur du genre silicone additionnée par exemple de carbure de silicium. Cette couche 14 est en contact selon sa longueur CD avec le rubanage semi-conducteur 21 lui-même en contact avec l'écran semi-conducteur 6.

L'enveloppe 1 doit être positionnée correctement sur l'extrémité du conducteur, comme représentée à la figure 1. Si elle est trop haute par rapport au câble c'est-à-dire insuffisamment enfilée sur celui-ci, l'extrémité de la couche 14 de répartition de champ électrique est décalée par rapport à l'écran 6 et risque de ne plus assurer un bon contact électrique avec cet écran dans la zone CD. Si au contraire elle est trop basse par rapport au câble c'est-à-dire enfilée trop profondément sur celui-ci, elle risque, d'une part de ne pas recouvrir suffisamment la cosse 3 par son extrémité 10, au détriment par conséquent de l'étanchéité, et d'autre part, de réduire la longueur BC qui représente la longueur active de la couche 14 de répartition de champ électrique, et de rendre ainsi ses effets insuffisants.

Pour éviter cela l'invention a prévu un moyen complémentaire de positionnement constitué d'un redent 15 représenté à la figure 2. Ce redent moulé dans la masse avec l'enveloppe 1, se trouve à l'intérieur de cette dernière à l'extrémité de la partie souple terminale 10. Il forme une excroissance circulaire interne dans l'enveloppe, dont la partie centrale est percée d'un orifice 16 d'un diamètre au moins égal au diamètre de l'âme centrale 2 du conducteur. La partie inférieure du redent 15, en direction de la partie centrale de l'enveloppe porte un pan coupé 17 autour de l'orifice 16 qui ménage une couronne plane 19 perpendiculaire à la paroi interne de l'enveloppe 1 le long de cette dernière. Par contre la face supérieure du redent 15, en direction opposée est totalement plane depuis l'orifice 16 jusqu'à la paroi interne de l'enveloppe. Enfin des fentes axiales 18 sont prévues sur toute la hauteur du redent et s'étendent jusqu'à la paroi interne de l'enveloppe 1. Les fentes 18 réparties délimitent des secteurs élémentaires de redent couvrant chacun une partie de l'enveloppe.

Quand on enfile cette enveloppe 1 sur l'extrémité unipolaire du conducteur, le bout de l'âme centrale 2 dudit conducteur va traverser l'orifice 16 du redent 15. Grâce aux pans coupés 17, l'âme 2 est orientée vers l'orifice 16 et ne risque pas de se bloquer contre le redent. Par contre, l'arrêt de la couche 5 d'isolant au niveau A arrivera en butée, du fait de son épaisseur, contre la partie plane circulaire 19 du redent 15, comme on le voit plus précisément à la figure 3. On ne peut donc enfoncer plus loin l'enveloppe sur le conducteur. A ce moment la face supérieure du redent 15, ayant échappé à la paroi extérieure de la cosse 3 vient en butée contre l'extrémité inférieure de cette dernière. Le redent 15 forme un cran de blocage de l'enveloppe qui ne peut non plus remonter sur le conducteur. Les fentes axiales 18 qui découpent le redent en plusieurs sections empêchent celui-ci de rigidifier l'enveloppe dans cette zone et permettent à la pièce de se déformer lors de son enfilage sur l'extrémité du conducteur.

Grâce à cette disposition, la mise en place du manchon d'isolation est assurée de façon aisée, avec un parfait positionnement par rapport à l'extrémité du conducteur, et sans risque d'un déplacement éventuel de l'élément en cours d'installation.

**Revendications**

1. Manchon d'isolation pour extrémité unipolaire de conducteur électrique, constitué d'une enveloppe souple monobloc du genre silicone et destinée à être enfilée sur l'extrémité d'un conducteur électrique terminé par une cosse fixée à l'âme centrale du conducteur dépassant d'une couche d'isolant et comportant un écran métallique semi-conducteur arrêté à une certaine distance de cette cosse,ladite enveloppe étant munie sur une partie de sa longueur d'une couche interne souple qui est destinée à venir en contact par au moins une de ses extrémités avec l'écran semi-conducteur et qui joue le rôle de couche de répartition de champ électrique, caractérisé en ce que ladite enveloppe (1) comporte au moins un moyen complémentaire (15,17,18) permettant d'assurer le positionnement précis de la couche (14) de répartition de champ par rapport à l'écran semi-conducteur (6).

2.- Manchon d'isolation selon la revendication 1, caractérisé en ce que le moyen complémentaire assurant le positionnement précis de l'enveloppe (1) sur le conducteur électrique est constitué d'un redent (15) localisé à l'intérieur de ladite enveloppe à proximité de l'extrémité de la partie terminale souple (10) de celle-ci, qui forme un cran de blocage entre l'extrémité de la cosse (2) du conducteur et l'arrêt de la couche d'isolant (5).

3.- Manchon d'isolation selon les revendications 1 et 2, caractérisé en ce que le redent (15) forme une excroissance à l'intérieur de l'enveloppe (1), sa partie centrale étant percée d'un orifice (16) d'un diamètre au moins égal au diamètre de l'âme centrale (2) du conducteur électrique.

4.- Manchon d'isolation selon les revendications 2 et 3, caractérisé en ce que la partie inférieure du redent (15) en direction de la partie centrale de l'enveloppe, porte un pan coupé (17) autour de l'orifice (16), qui ménage le long de ladite enveloppe une couronne plane (19) perpendiculaire à la paroi interne de cette dernière.

5.- Manchon d'isolation selon les revendications 2 et 3, caractérisé en ce que des fentes axiales (18) sont prévues sur toute la hauteur du redent (15) et s'étendent jusqu'à la paroi interne de l'enveloppe (1).

6.- Manchon d'isolation selon la revendication 5, caractérisé en ce que le redent (15) est divisé en secteurs élémentaires égaux par des fentes axiales (18).

0246974

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 007 584 (MARS-ACTEL) <br> * Figures 15A,15B * | 1 | H 02 G 15/068 |
| | --- | | |
| Y | DE-A-2 706 753 (KABEL- UND LACKDRAHTFABRIKEN) <br> * Page 5, alinéas 4,5; page 6, alinéas 1,2; figure 1 * | 1 | |
| | --- | | |
| A | US-A-3 692 922 (SUMITOMO) <br> * Figures 3,4 * | 1-3 | |
| | --- | | |
| A | DE-U-1 933 173 (RHEINISCHE DRAHT- UND KABELWERKE) <br> * Résumé; figures * | 1-3 | |
| | ----- | | |

DOMAINES TECHNIQUES
RECHERCHES (Int. Cl.4)

H 02 G

Le présent rapport de recherche a été établi pour toutes les revendications

| Lieu de la recherche | Date d'achèvement de la recherche | Examinateur |
|---|---|---|
| LA HAYE | 28-08-1987 | LOMMEL A. |